# EUROPEAN PATENT APPLICATION

(11) **EP 3 611 609 A1**
(43) Date of publication of application: **19.02.2020**
(21) Application number: 19191108.0
(22) Date of filing: 09.08.2019
(51) Int. Cl.: G06F 3/0481, G06F 3/14, G06F 3/0488

(54) **CONTROLLING DISPLAY OF IMAGES**

(30) Priority: 16.08.2018 GB 201813398
(71) Applicant: Displaylink (UK) Limited, Milton Road Cambridge Cambridgeshire CB4 0GF (GB)
(72) Inventor: EDMONDS, Timothy Mark, 34170 Castelnau-le-Lez (FR); ROOSE, William George, Ely, Cambridgeshire CB6 3WA (GB); JEACOCKE, Jonathan Alexander, Bedford, Cambridgeshire MK41 7YL (GB)
(74) Representative: Hirsz, Christopher Stanislaw

(57) **Abstract**

A number of computing devices (13) are controlled from a touchscreen display system (11) using a Touch Intermediator Machine (TIM) (12) receiving information indicating the location of one or more touches on a connected touchscreen panel (11). The TIM (12) determines whether the pattern of touches received matches one of a pre-programmed set of interface manipulation gestures. If so, the TIM (12) alters the user interface presented on the connected touchscreen display system (11) depending on the gesture detected. If not, the TIM (12) determines the connected computing device (13) associated with the location of the touch received and updated co-ordinates of the touch received within an area on the touchscreen display system (11) associated with the connected computing device (13). The TIM (12) transmits information to the relevant connected computing device (13) regarding the touch received. The computing device (13) processes the information to determine the pattern of touches received and responds to the pattern of touches received according to predetermined instructions for user interaction.

## Description

### Background

In collaborative working contexts such as meeting rooms, it is often desirable to be able to connect a presenting computing device to one or more large display panels so that a speaker or multiple other users can interact with displayed data from the display panels, rather than from the presenting computing device. It is further becoming desirable to connect multiple computing devices in order to view and interact with different pieces of information in a single interface.

This creates problems when touchscreen display panels are used because conventional touchscreen interfaces are not designed to handle more than one interaction at a time and especially not to handle interactions with more than one connected computing device at a time. This can lead to problems such as some touch interactions being ignored, users being apparently able to "drag" objects off the display image associated with one computing device onto the display image associated with another, and difficulty in configuring the layout of the touch interface and mapping touch interactions to computing devices.

The methods and devices of the invention seek to at least mitigate some of these problems.

### Summary

Accordingly, in a first aspect, there is provided a method of controlling display of at least one image from one or more client devices on at least one remote touchscreen display panel, the method comprising:
receiving information regarding a location at which at least one image from one or more client devices is displayed on at least one remote display panel;
receiving information regarding a human interaction performed by a user on the at least one display panel;
comparing the information to stored information regarding predetermined known interactions to determine whether the performed human interaction corresponds to one of one or more predetermined known interaction;
if it is determined that the performed human interaction corresponds to one of one or more predetermined known interactions:
controlling the at least one display panel to display the at least one image on the at least one display panel according to predetermined instructions associated with the predetermined known interaction corresponding to the performed human interaction; and
if it is determined that the performed human interaction does not correspond to a predetermined known interaction:
determining one or more images displayed on the at least one display panel associated with the performed human interaction;
determining one or more client devices from which the determined one or more images was received; and
sending the information regarding the performed human interaction to the determined one or more client devices.

In a preferred embodiment, the least one remote display panel comprises at least one touchscreen display panel and the human interaction comprises a touch gesture performed by the user on the at least one touchscreen display panel. Preferably, determining one or more images displayed on the at least one display panel associated with the performed human interaction comprises determining a location on the at least one touchscreen display panel at which the touch gesture is performed, and the determined one or more images are displayed at or near the determined location.

Preferably, the information includes at least a number of touches performed simultaneously forming the touch gesture, and a location on the at least one touchscreen display panel of a beginning and end of each touch forming the touch gesture.

In an embodiment, the method further comprises determining from the information a type of touch gesture being performed and the comparing compares the determined type of touch gesture to predetermined known touch gesture types.

Alternatively, the human interaction may comprise a gesture performed by the user in three dimensions, 3D, which may be performed using one or more Virtual Reality gloves, or a 3D air pointer device or in some other way, or the human interaction may comprise a voice statement, which is received by a microphone. Preferably, the method may further comprise determining whether the voice statement is provided in a voice corresponding to the voice of an authorised user and, if so, determining whether the voice command corresponds to one of one or more predetermined voice commands.

In a preferred embodiment, the steps are performed by an interaction analyser, wherein if it is determined that the performed human interaction corresponds to a predetermined known interaction, the interaction analyser informs a user interface, UI, controller to control the at least one display panel according to the predetermined instructions associated with the predetermined known interaction and if it is determined that the performed human interaction does not correspond to a predetermined known interaction the interaction analyser sends the information to the determined one or more client devices.

Preferably, the method further comprises:
receiving the at least one image from one or more client devices; and
displaying the image initially on a predetermined area of the at least one display panel.

Preferably, at least one image is received from a plurality of client devices, the images from each of the plurality of client devices being displayed initially on predetermined areas of the at least one display panel.

Preferably, the predetermined area of the at least one display panel is predetermined according to the client device from which the image is received, or according to an order in which the images are received, or according to content type in the images that are received.

The steps of receiving the at least one image and displaying the image are preferably performed by a user interface, UI, controller.

According to a second aspect, the invention provides an apparatus for controlling display of at least one image from one or more client devices on at least one remote display panel, the apparatus configured to perform the steps of the method as described above occurring at the interaction analyser, and may, if desired, also perform the steps of the method occurring at the UI controller. According to a further aspect, there is provided a system comprising:
an interaction analyser comprising an apparatus as described above;
a user interface, UI, controller coupled to the apparatus;
at least one display panel coupled to the UI controller; and
one or more client devices coupled to the UI controller.

In one embodiment, the UI controller may be incorporated into the interaction analyser.

According to a still further aspect, the invention provides a method of controlling a plurality of computing devices from a touchscreen display system, the method comprising:
1. A Touch Intermediator Machine (TIM) receiving information indicating the location of one or more touches on a connected touchscreen panel;
2. The TIM determining whether the pattern of touches received matches one of a pre-programmed set of interface manipulation gestures;
3. If so, the TIM altering the user interface presented on the connected touchscreen display system depending on the gesture detected;
4. If not:
   a. The TIM determining the connected computing device associated with the location of the touch received;
   b. The TIM determining updated co-ordinates of the touch received within an area on the touchscreen display system associated with the connected computing device;
   c. The TIM transmitting information to the relevant connected computing device regarding the touch received;
   d. The computing device processing the information to determine the pattern of touches received;
   e. The computing device responding to the pattern of touches received according to predetermined instructions for user interaction.

This allows users to interact more conveniently with multiple computing devices through a touchscreen panel.

### Brief Description of the Drawings

Embodiments of the invention will now be more fully described, by way of example, with reference to the drawings, of which:
Figure 1a shows a block diagram of an example system according to a first embodiment of the invention;
Figure 1b shows a detail of the display images and client areas in the system of Figure 1a;
Figure 2 shows a block diagram of an example system according to a second embodiment of the invention;
Figure 3 shows a block diagram of an example system according to a third embodiment of the invention;
Figure 4 shows a simplified block diagram of the internal workings of the TIM in the system of any of the first, second or third embodiments;
Figure 5 shows an example decision-making process in the TIM of Figure 4;
Figures 6a and 6b show example event-handing processes in the TIM of Figure 4;
Figure 7 shows an example event-handing process in a connected computing device; and
Figure 8 is a block diagram of a computer system suitable for implementing one or more of the embodiments.

### Detailed Description of the Drawings

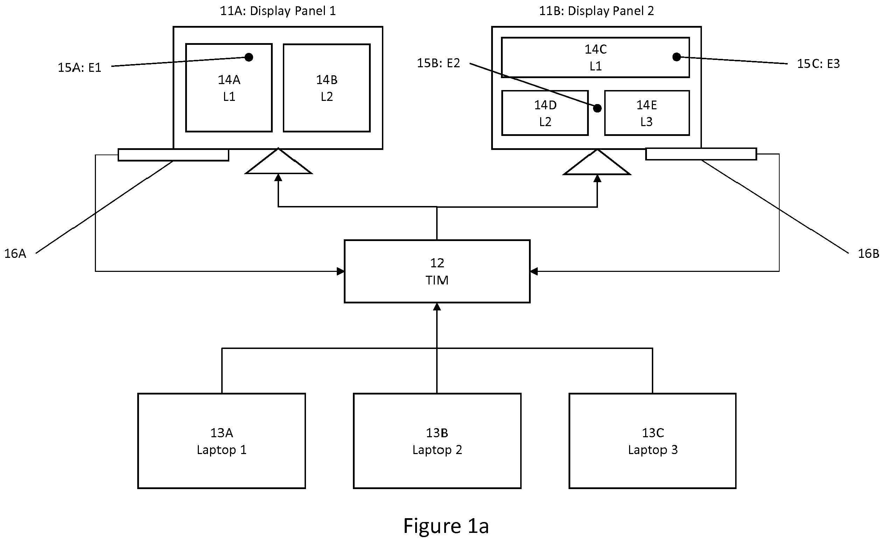

Figure 1a shows a block diagram of an example system, including two display panels [11], which in this example are touchscreens, each with a controller [16] connected to a Touch Intermediator Machine (TIM) [12], which in turn is connected to three computing devices [13]. In this example, the computing devices [13] are identified as laptops, but they could also be tablets, smartphones, or any other computing device or combination of computing devices.

The computing devices [13] run applications which produce display data for display on the display panels [11]. They each transmit their respective display images produced to the TIM [12] as if transmitting it to a directly connected display device or multiple devices and can also receive signals and commands from the TIM [12].

The TIM [12] controls the user interface and the presentation of display images produced by the computing devices [13], including by scaling and distorting the images received and sending them for display on the display panels [11]. The display panels [11] are divided up into client areas [14], each area associated with a computing device [11]. The TIM [12] uses its control of the user interface to display the received display images within the appropriate client areas [14].

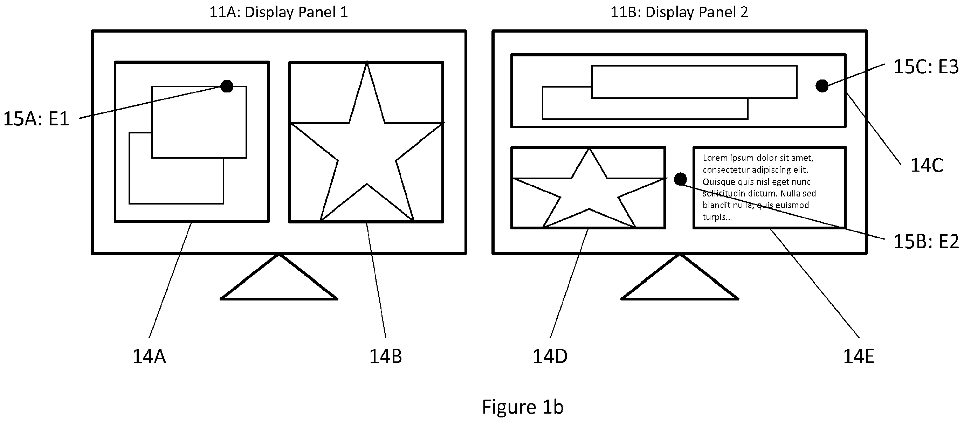

A detailed view of the display panels [11] showing the client areas [14] and display images is shown in Figure 1b. The same display panels [11] and client areas [14] are used in all three example systems even though the display panels [11] only need to be touchscreens in this first example system.

As shown in Figure 1a, there are two client areas [14A, 14C] associated with Laptop 1 [13A], one [14A] on the left-hand side of Display Panel 1 [11A] and the other [14C] along the top of Display Panel 2 [11B]. These client areas [14A, 14C] show the same display image, appropriately scaled, as shown in Figure 1b, comprising two application windows.

There are also two client areas associated with Laptop 2 [13B], one [14B] on the right-hand side of Display Panel 1 [11A] and the other [14D] in the lower-left corner of Display Panel 2 [11B]. These client areas [14B, 14D] show the same display image - a star - appropriately scaled as shown in Figure 1b.

There is only one client area [14E] associated with Laptop 3, in the lower-right corner of Display Panel 2 [11B]. As shown in Figure 1b, the display image shown in this client area [14E] comprises text. This may be scaled according to the size of the client area [14E] or the display image may be amended according to signals from the TIM [12] to allow more or less text to appear.

Although in the Figures each computing device [13] has only one client area [14] on each display panel [11], a single computing device [13] could have multiple client areas [14], either treated as separate connected display panels for the purpose of what display images the computing device [13] supplies or showing identical display images.

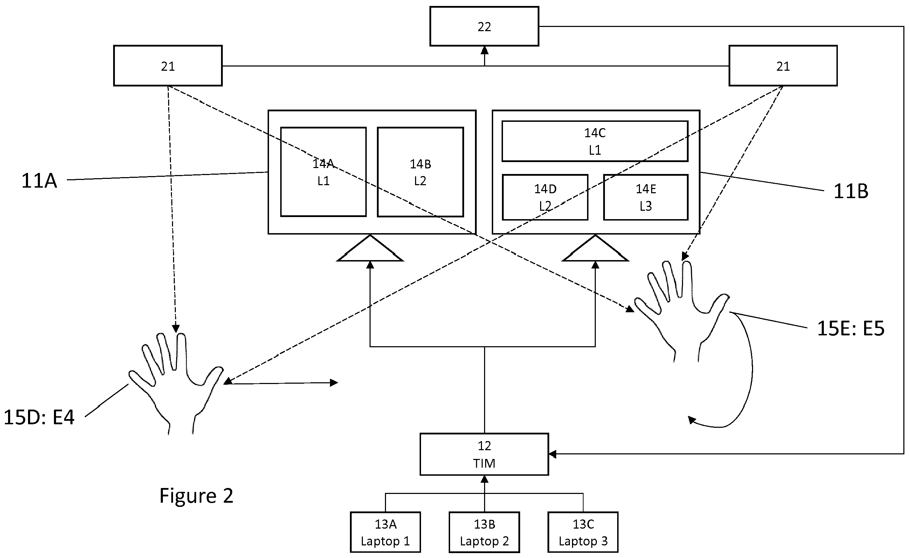

Figure 2 shows an alternative example system in which user interaction occurs via hand gestures made in 3D space rather than through touch interactions on a touchscreen panel as in Figures 1a and 1b. It shows the same two display panels [11], which in this embodiment need not be touchscreen panels, connected to a TIM [12], which is connected to three computing devices [13] as previously described. These may be the same three computing devices [13] as in Figure 1 or may be differently configured to accept 3D input. However, they still transmit their respective display images to the TIM [12] for display in client areas [14] and receive signals and commands from the TIM [12], which also acts as previously described.

Figure 2 also shows two sensors [21] which detect movement of the user's or users' hands. Such sensors [21] may be cameras which detect all user movement and gestures or may be or be designed to detect dedicated sensors that the user holds or wears on his or her person, such as special gloves. The sensors are connected to a controller [22] which sends signals and information on detected movements to the TIM [12].

Although Figure 2 shows the sensors [21] detecting the user's or users' hands or gloves worn on such hands and the description hereinafter will assume this case, any physical gesture in a 3D space may be used, including gestures made with devices such as game controllers or 3D air pointer devices.

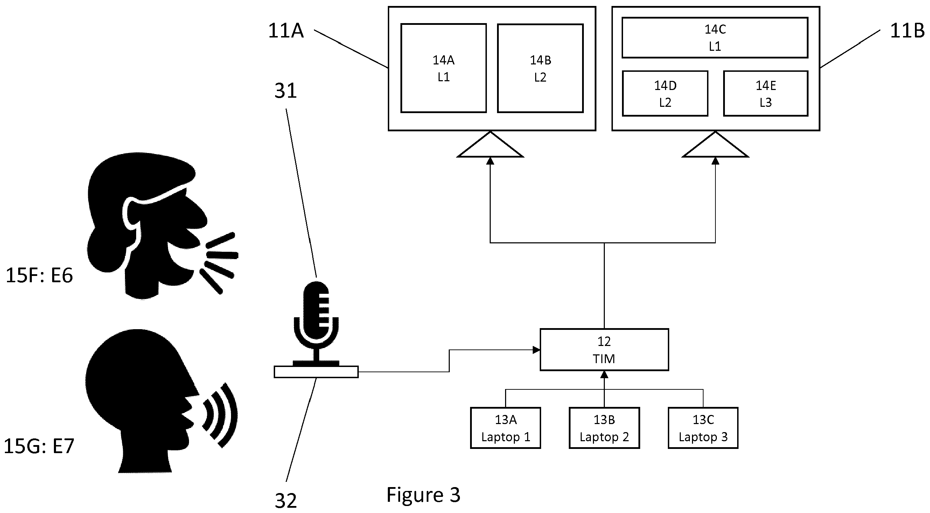

Figure 3 shows a third alternative example system in which user interaction occurs via voice commands or other sound input. In this example, as well as the three computing devices [13] and two display panels [11], which as in Figure 2 may or may not be touchscreen panels, the TIM [12] is connected to a controller [32] incorporated into or connected to a microphone [31] which is used for receiving voice commands from the users.

In all three embodiments, the controller [16, 22, 32] may be a separate device or may be incorporated into the respective user interaction input device [11, 21, 32] such that they appear to be a single device.

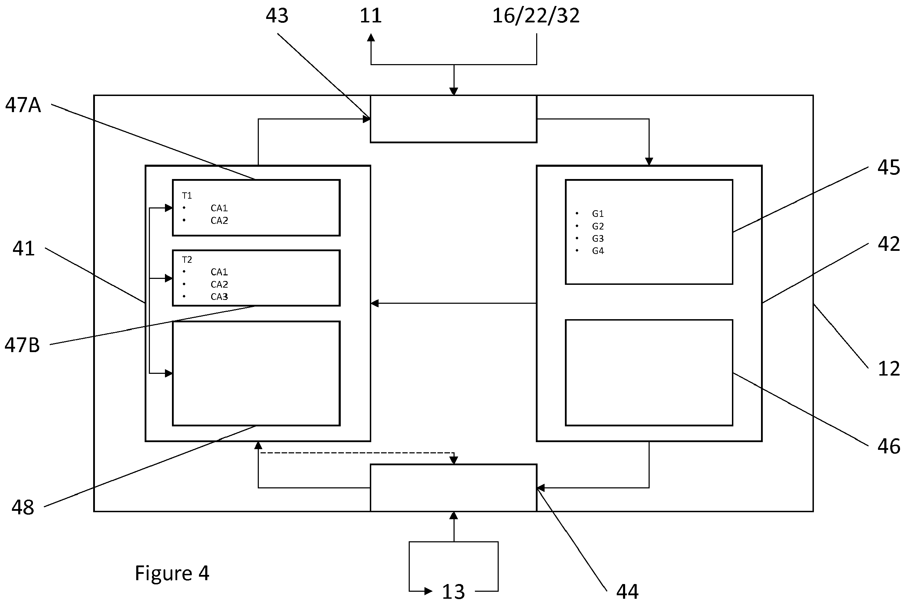

Figure 4 shows a more detailed view of the TIM [12] shown in Figure 1a. It includes an internal UI controller [41] which includes a list [47] of the client areas [14] on each display panel [11], including their locations and sizes although these details are not shown. The UI controller [41] also includes a control processor [48] which can access and amend these lists [47] in order to change the layout of the user interface as shown on the display panels [11].

The initial locations, sizes, and layout of the client areas [14] are determined as the computing devices [13] are connected to the TIM [12] according to predetermined heuristics. These may include identification of the computing devices [13] such that, for example, a particular computing device belonging to a moderator is initially assigned a client area [14] that takes up all of - in this example - Display Panel 1 [11A] while the other computing devices [13] are assigned client areas [14] in a grid on Display Panel 2 [11B]. Alternatively, the initial arrangement heuristics may be based on the order in which the computing devices [13] are connected to the TIM [12], the order in which the TIM [12] begins receiving display images from the computing devices [13], and/or the type of content in the display images such that, for example, if a computing device [13] is connected and sends a signal to the TIM [12] indicating that it will be transmitting video, the UI controller [41] might assign it a larger and more prominent client area [14]. Naturally, any combination of these or other heuristics could be used as appropriate.

The TIM [12] also includes an interaction analyser [42] which includes a list [45] of predetermined known interactions which act as controls for the user interface and may therefore be known as user-interface controls, user-interface gestures, user-interface commands, or similar terms as appropriate. The interaction analyser [42] also includes an identification processor [46] which receives signals regarding user interactions from the appropriate connected controller [16/22/32] and compares them to the known interactions [45] in order to determine whether the signals should be passed to the UI controller [41] or to the computing devices [13].

The TIM [12] also includes two input/output engines, one [43] connected to the controller or controllers [16/22/32] (the IIO) and the display panels [11] and the other [44] to the computing devices [13] (the CDIO). Both engines [43, 44] can receive and transmit data. The CDIO [44] transmits signals to the connected computing devices [13], including data requests, commands, and information on user interactions received from the controllers [16/22/32] and passed on by the interaction analyser [42], and it receives the display images generated by the computing devices [13] and passes them to the UI controller [41] for arrangement according to the stored client area information [47]. The IIO [43] receives incoming user interaction details from the controllers [16/22/23] and passes it to the interaction analyser [42] as well as transmitting display data as arranged by the UI controller [41] using the received display images from the computing devices [13].

Finally, the interaction analyser [42] is connected to the UI controller [41] so that it can send signals regarding changes to the user interface depending on the interactions received from the IIO [43].

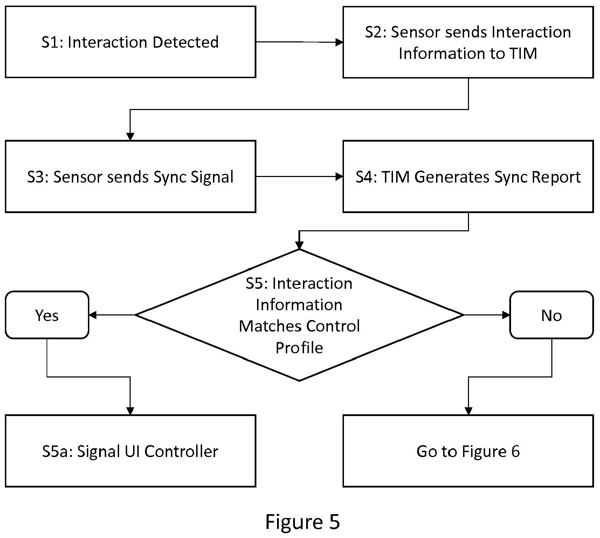

Figure 5 shows an example decision-making process, mostly carried out in the interaction analyser [42]. This part of the overall process determines whether an interaction that occurs through - in these three examples - a user touching one or more touchscreen panels [11], moving a hand, or giving a voice command matches the profile of one of the predetermined known interactions [45] for controlling the user interface.

At Step S1, a user interacts with the system. In the example shown in Figure 1, this means that he or she touches one of the touchscreen panels [11] or continues to touch a touchscreen panel [11], for example as part of a drag gesture. The touchscreen panel [11] detects this touch in the conventional way. In the example shown in Figure 2, it means that the user moves a hand or otherwise makes a physical gesture which is detected by the sensors [21] in the appropriate way. In the example shown in Figure 3, it means that the user speaks or makes another sound such as a pattern of clicks, whistles, finger-snaps, or claps and this sound is detected by the microphone [31] in the conventional way.

At Step S2, the controller incorporated into the touchscreen panel [16], sensors [22], or microphone [32] transmits information on the received interaction to the TIM [12]. In one embodiment of the system shown in Figure 1, this means that the controller [16] assigns an ID to each point of touch and sends this ID together with X,Y co-ordinates of the touch on the touchscreen panel [11] to the TIM [12]. If there are multiple touchscreen panels [11A, 11B], as in Figure 1, the ID may be within a range mapped to all the touchscreen panels [11], or the TIM [12] may perform remapping when it receives the touch information. In any case, this means that the TIM [12] will be able to refer to each touch specifically and determine its location, improving the chances of correctly identifying commands and sending signals to the correct devices [13, 41]. The information may also include touch interactions from multiple timepoints, for example the whole of an extended drag gesture such that the information transmitted includes the number of touch points and also the beginning and end of the gesture as opposed to a snapshot in time.

Similarly, in an embodiment of the system shown in Figure 2, the controller [22] might assign an ID to each moving part, for example each hand that the sensors [21] can detect, or at different granularities such as each user or each finger. In this case, the IDs could be assigned upon initial configuration and used throughout the time the user(s) is/are using the system. Alternatively, a new ID could be used for each movement regardless of which user has moved. In an embodiment of the system shown in Figure 3, the controller [32] might similarly assign an ID to each voice or to each sound.

At Step S3, in this embodiment, the controller [16, 22, 32] sends a synchronisation signal to the TIM [12]. This is a timing signal which is sent periodically regardless of whether any user interaction has occurred. It acts as a signal to the TIM [12] that it should process the received interaction information from the touchscreen panel [11], sensors [21], or microphone [31], therefore meaning that interactions can be processed in batches. If there are multiple sources of input with separate controllers, such as the touchscreen panels [11A, 11B] in Figure 1, such synchronisation signals can be co-ordinated such that the respective controllers [16A, 16B] send their synchronisation signals simultaneously, or the synchronisation signals may be asynchronous such that the TIM [12] processes interaction information received from each controller [11] independently of any others. If there are multiple sensors with a single controller, as in Figure 2, the TIM may treat the controller [22] as a single input or the controller [22] may transmit interactions received from different sensors [21] separately.

In other embodiments, the synchronisation signal may simply mark the boundary between batches of interaction information and may therefore only be sent when there is a change in, for example, the location of a touch interaction on one of the touchscreen panels [11] in a system such as that shown in Figure 1. In this case, the touchscreen panel's [11] controller [16] may only transmit the changed information, which can then be combined with previously-transmitted information. For example, if only the x component of the co-ordinates of a touch interaction has changed, the touchscreen panel's [11] controller [16] might transmit only the updated x component followed by a synchronisation signal, and the TIM [12] might then combine this updated x component with a previously-received y component to derive a new location.

At Step S4, in an embodiment in response to the received synchronisation signal, the interaction analyser [42] reads the interaction information received by the TIM [12] from the relevant controller [16/22/32] up to the synchronisation signal. This may include interaction information from other interactions detected by the same sensor or other sensors in a system such as that shown in Figure 1 where there are multiple sources of input connected to a single TIM [12], especially since, as previously mentioned, the synchronisation signals may be co-ordinated. It collects the interaction information associated with each interaction into a report.

In a system such as that shown in Figure 1 in which user interactions are received through touch panels [11], identification of different interactions may involve, for example, identifying all touch interactions moving in the same direction at the same rate and collecting them into a single report or it may mean collecting all touch interactions located within a predetermined distance of each other - for example the average size of a human hand - into a single report. As well as touch location and movement direction, the TIM [12] might use other parameters, including pressure, hover, size of each area of pressure, orientation of non-circular areas of pressure, etc.

In a system such as that shown in Figure 2 in which user interactions are received through user movement in space, identification of different interactions may involve, for example, identifying whether the same user made all the movements comprising an interaction or whether there was a continuum of movement such that a second movement after a predetermined time period is considered a separate interaction. Where the sensors [21] detect movement using sensors on the user's person, such as a glove, sensors may be associated with each other to indicate when multiple sensors are associated with a single user.

In a system such as that shown in Figure 3 in which user interactions are received through sound, identification of different interactions may involve determining types of sound - for example, distinguishing a voice command from a clap - and determining that different types of sound are different interactions. Alternatively or additionally, it may involve detecting a gap between sounds received and determining that two sounds are separate interactions if there is more than a predetermined period of silence between them.

Multiple interactions might be collected into one report with a further identification to allow different interactions to be distinguished. Identifying interactions might also involve comparing the received interaction information and possibly stored interaction information from earlier in the same interaction to a predetermined known interaction type in order to determine the type of interaction, for example distinguishing a tap from a drag or a circular motion.

At Step S5, the identification processor [46] within the interaction analyser [42] determines whether the interaction information in a particular report matches one of the stored pre-programmed profiles [45] of a user-interface control event. For example, a five-point drag on a touchscreen panel, a hand closing into a fist and then moving, or the spoken word "move" might indicate that a client area [14] should be moved. If the interaction information in the report does match one of the stored pre-programmed profiles [45] of a user-interface control event [45], the process follows the branch to the left beginning at "Yes" and at Step S5a the interaction analyser [42] signals the UI controller [41] to indicate that it should change the arrangement of the user interface.

This may involve forwarding the report to the UI controller [41] so the control processor [48] can match the interaction information to a specific predetermined known interaction and associated collection of instructions itself. Alternatively, the interaction analyser [42] may send the instructions associated with the interaction to the UI controller [41] and the control processor [48] can then carry them out.

In any case, the UI controller [41] amends the information [47] stored on the client areas [14], changing their locations and sizes in accordance with the instructions associated with the received interaction.

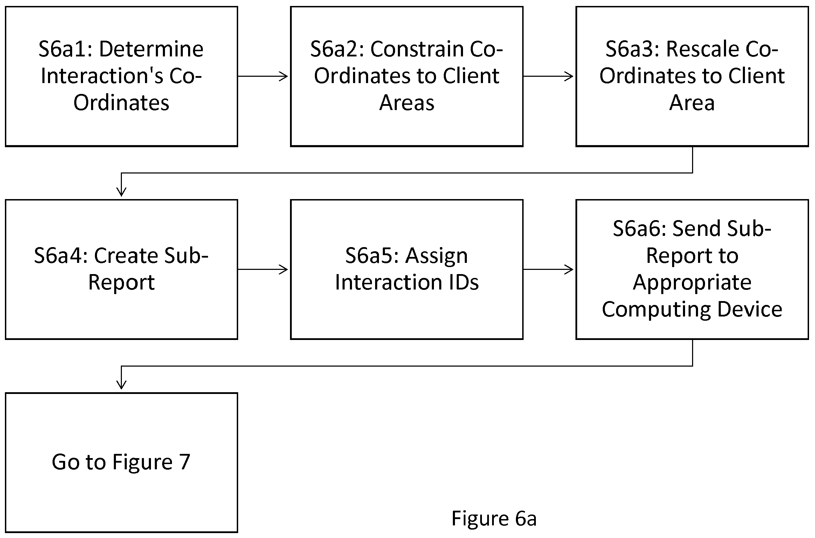

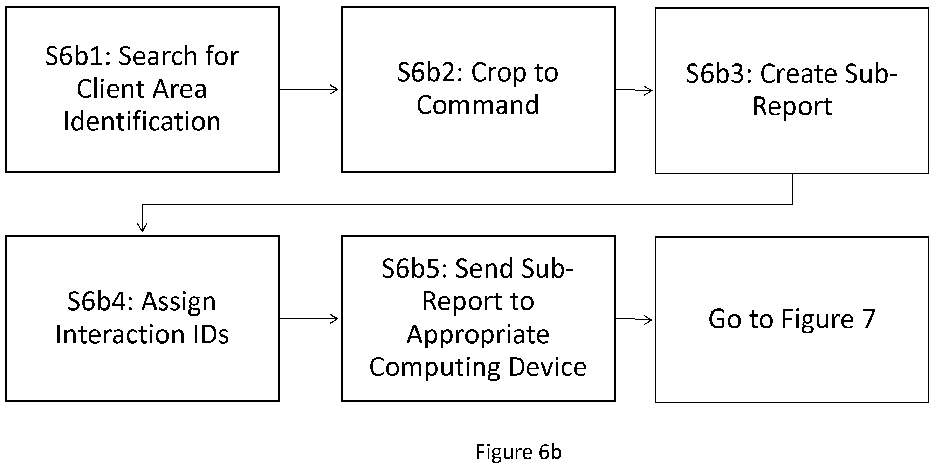

If the identification processor [46] determined that the interaction information did not match a predetermined known interaction [45], the process follows the branch to the right, beginning at "No", and moves to the steps described in Figures 6a and 6b.

Figure 6a shows the steps followed in the case of a system such as that shown in Figure 1 in which user interactions are received as touch interactions on one or more touchscreen panels [11]. Figure 6b shows the steps followed in the case of a system such as that shown in Figure 3 in which user interactions are received as sounds, ideally but not necessarily vocal commands. A system such as that shown in Figure 2 in which user interactions are received as movement in space may follow either process depending on the exact embodiment.

Figure 6a will be described in full first, followed by Figure 6b.

At Step S6a1 of Figure 6a, the identification processor [46] determines the co-ordinates of each touch interaction in the current report. In most cases, the co-ordinates will have been transmitted to the TIM [12] by the relevant touchscreen panel controller [16], as previously described. Where a process such as this is used in a system like that shown in Figure 2, the co-ordinates may be in 3D space as opposed to on a 2D panel.

At Step S6a2, the identification processor [46] constrains those co-ordinates to the client areas [14]. This means that for each client area [14] the identification processor [46] determines whether each touch interaction took place within that client area [14]. This may involve fetching the locations and sizes of the client areas [47] from the UI controller [41]. Since there may be multiple client areas [14] associated with each computing device [13], as is the case for the client areas [14A, 14C, 14B, 14D] associated with Laptop 1 [13A] and Laptop 2 [13B], this may also involve merging the co-ordinates of different client areas [14] as if all touches took place within the same client area [14], taking account of the time at which each touch occurred. If different touch interactions within a report or identified interaction took place in different client areas [14], the report or interaction may be split up or some of the interactions may be discarded.

At Step S6a3, the identification processor [46] converts the locations of the touch interactions from co-ordinates relative to the whole touchscreen panel [11] to co-ordinates relative to the relevant client area or areas [14]. This is known as re-scaling the co-ordinates.

At Step S6a4, the identification processor [46] creates a new report for each connected computing device [13] containing the touch information for each touch interaction within that computing device's [13] associated client area [14], including the re-scaled co-ordinates. If there are no touches within a client area [14], the report may be empty. The identification processor [46] also assigns new IDs to the touch interactions at Step S6a5 so that the computing devices [13] can monitor changes to particular touch interactions over time regardless of reports sent to other computing devices [13]. Steps S6a4 and S6a5 may be carried out in reverse order or simultaneously depending on the details of the embodiment.

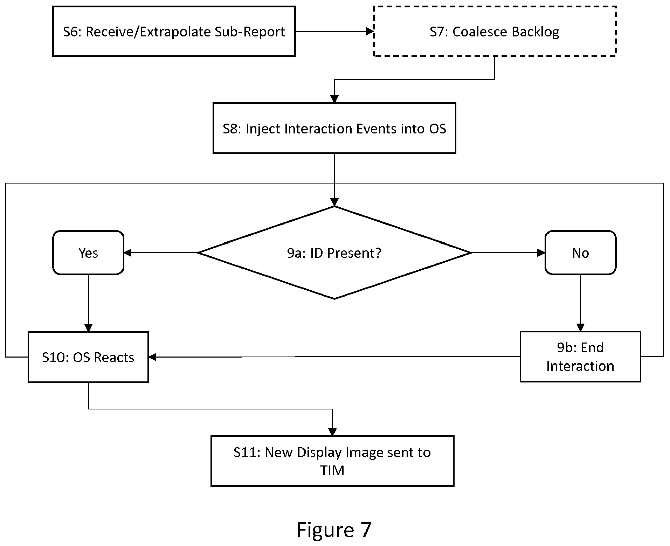

At Step S6a6, the interaction analyser [42] passes the generated reports to the CDIO [44], which sends each report to its respective computing device [13]. The process then moves on to the steps described in Figure 7.

At Step S6b1 of Figure 6b, the identification processor [46] analyses the received sound for a client area identification. Client area identifications may be pre-determined, either programmed into the identification processor [46] during manufacture or during a configuration or training process or by a combination of the two. For example, the identification processor [46] may be pre-programmed to identify each client area [14] as "Client area 1", "Client area 2" etc. and use voice recognition to identify whether a user is saying one of those phrases. The accuracy of this determination could be improved by recording each user saying each phrase during configuration in order to account for different accents, any speech impediments, etc. Alternatively, when connecting a computing device [13] and initially creating a client area [14] the TIM [12] could ask the user to provide an identification such as "Jane's Laptop, Screen 1" or a series of three claps. This system is much more flexible.

In any case, the identification processor [46] analyses the received sound for a series of sounds that match a stored identification. This allows it to determine which client area [14] is relevant and therefore which connected computing device [13] should receive signals and commands in the same way as it uses co-ordinates in the process described in Figure 6a.

Where a process such as this is used in a system such as that shown in Figure 2, the identification processor [46] instead analyses the movements detected by the sensors [21] and comprising the interaction for a specific movement indicating a client area [14]. For example, the user may point in a particular direction prior to continuing a gesture; in this example the identification processor [46] will analyse the movements to identify the pointing motion and its direction. Similarly, such identifications may be pre-programmed or determined by the user through training, and identification of pre-programmed client area identifications may be improved through training.

At Step S6b2, the identification processor [46] amends the received sound or movement data to remove the client area identification. This is an optional step that in some embodiments may not be used, but it allows the TIM [12] to transfer only the actual interaction to the computing device [13], which may not be aware of the arrangement of client areas [14]. This step will therefore avoid any unexpected behaviour by the computing device [13], especially if a user-selected client area identification is similar to a different command used by the computing device [13].

At Step S6b3, the identification processor [46] creates a report for either the relevant computing device [13] or each connected computing device [13], containing all relevant interactions for each computing devices [13] in the same way as described at Step S6a4, including assigning interaction IDs at Step S6b4 in the same way as at Step S6a5.

At Step S6b5, the interaction analyser [46] passes the generated reports to the CDIO [44], which transmits each one to its respective computing device [13] as previously described. The process then moves on to the steps described in Figure 7.

At Step S6, the computing device [13] receives a report sent by the TIM [12]. Optionally, if no report has been received for longer than a predetermined timespan, the computing device [13] might extrapolate a report based on previous reports, for example if there had previously been an ongoing user interaction such as a drag gesture moving across the client area [14] associated with that computing device [13] on a touchscreen panel [11] in a system such as that shown in Figure 1, the computing device [13] might assume that the user interaction is continuing in the same way and generate its own report to that effect. In either case, the computing device [13] may not be aware of what reports might have been sent to other computing devices [13], or of the existence of other client areas [14]; it only receives touch information from within its own client area [14] with co-ordinates mapped to the co-ordinates of that client area [14].

At Step S7, if there is a backlog of received interaction reports, the computing device [13] coalesces them into a single report, perhaps overwriting previous information that is no longer relevant. This may mean, for example, discarding a previous location for a user interaction that is part of an ongoing movement and only retaining the most recent location. Since this step will only be used in some circumstances, it is optional and therefore shown outlined with dashes in the Figure.

At Step S8, the received interaction information is sent to the operating system (OS) of the computing device [13]. The whole report may be passed to the OS or it may be broken down into individual interactions and signals depending on the operation of the computing device [13].

For example, the computing device [13] may be connected to the TIM [12] via a dongle which presents to the OS as a directly-connected Human Interface Device (HID) such as a mouse. The OS can then interact with the dongle directly, meaning that the OS will treat incoming user interactions as if they are received from a directly-connected HID.

In any case, the OS receives the interaction information and analyses it. An example of such analysis is shown in Figure 4 as Steps S9a and S9b.

At Step S9a, the OS determines whether an interaction ID which was present in previous reports is present in the current report - i.e. whether a particular user interaction has continued. If not, the process follows the branch to the left, beginning at "No", to Step S9b and the OS determines that that user interaction has ended. The interaction ID may not be present in the report because that user interaction has in fact ended or because that user interaction was not considered relevant to the client area [14] associated with the computing device [13] and therefore it was ignored earlier in the process.

The process then proceeds to Step S10. If the particular interaction ID was present at Step S9a, the process proceeds directly to Step S10. In either case, the OS reacts to the interaction or the ending of the interaction in the appropriate way according to its programming. This may, for example, include moving windows, opening menus and receiving selection inputs, interacting with game mechanics, etc.

The OS reacting to the interaction is likely to result in a change to the display image and the OS will therefore produce a new display image, which is sent to the TIM [12] at Step S11. The TIM [12] will receive it at the CDIO [44] and the UI controller [41] will incorporate it into the display data transmitted to the display panels [11] according to the stored client area information [47].

The process described in Figures 5, 6, and 7 will now be described for seven touch interactions shown in Figure 1a as E1 [15A], E2 [15B], and E3 [15C], Figure 2 as E4 [15D] and E5 [15E], and Figure 3 as E6 [15F] and E7 [15G]. Of these:
- E1 [15A] is an ongoing drag with a single finger which acts as a signal to move a window across the display image of Laptop 1 [13A];
- E2 [15B] is a circular five-finger movement which signals to the computing devices [13B, 13C] associated with the closest client areas [14D, 14E] to the location of the touch interaction [15B] to turn off their internal displays;
- E3 [15C] is a four-finger drag which indicates that the client area [14C] at the location of the interaction [15C] should be resized;
- E4 [15D] is a hand gesture in which the whole hand moves from left to right, which acts as a signal to move a window across the display image of Laptop 1 [13A];
- E5 [15E] is a hand gesture in which the whole hand is moved in a clockwise circle, which acts as a signal to move all the client areas on Display Panel 2 [11B] to the bottom of the panel;
- E6 [15F] is a voice command comprising the words "Snap client area two left" which acts as a signal to move the client area [14B] on Display Panel 1 [11A] associated with Laptop 2 [13B] to the left-hand side of Display Panel 1 [11A], displacing the client area [14A] associated with Laptop 1 [13A]; and
- E7 [15G] is a voice command comprising the words "Laptop two, open word processor", which acts as a signal that Laptop 2 [13B] should run a word processing program.

This means that E1 [15A], E4 [15D], and E7 [15G] are user interactions which do not match any predetermined known interactions which control the user interface [45] and therefore result in a report being transmitted to the computing devices [13] while E2 [15B] controls the overall user interface and results in a command being sent to the computing devices [13] and E3 [15C], E5 [15E], and E6 [15F] control the user interface shown on the display panels [11] and result in a change in the information [47] stored by the UI controller [41].

The process will now be described with respect to E1 [15A].

At Step S1, Display Panel 1 [11A] detects a touch interaction. In the case of E1 [15A] this may be the beginning of a drag gesture or may be the continuation of the drag gesture by a change in location of an existing touch interaction.

At Step S2, Display Panel 1 [11A] determines the location of E1 [15A] and its controller [16A] sends a single ID and set of co-ordinates - since E1 [15A] consists of a single touch - to the TIM [12]. At Step S3, it also sends its periodic synchronisation signal.

At Step S4, the interaction analyser [42] generates a report containing the touch information received from Display Panel 1's controller [16A]. At Step S5, the identification processor [46] then compares the received touch information to the predetermined known interactions [45] to determine whether the touch interaction is a command to control the user interface. In this example, a single-finger drag is not one of the predetermined known interactions [45], so the process moves on to the steps described in Figure 6a.

At Step S6a1, the identification processor [46] determines the co-ordinates of the location at which E1 [15A] occurred using the touch information sent by Display Panel 1's controller [16A], for example (30,70). At Step S6a2, the identification processor [46] then checks whether that location is within a client area [14] and, if so, which one. If not, the identification processor [46] might discard the touch information on the assumption that it was accidental or otherwise invalid.

For the purposes of this description, the co-ordinates of the client area [14A] on Display Panel 1 [11A] associated with Laptop 1 [13A] are as follows:
- Lower left corner: (5, 10)
- Upper left corner: (5, 90)
- Lower right corner: (40, 10)
- Upper right corner: (40, 90)

E1 (at (30, 70)) [15A] therefore falls within the client area [14A] associated with Laptop 1 [13A].

At Step S6a3, the identification processor [46] determines the co-ordinates of E1 [15A] relative to the client area [14A], for example by treating the lower-left corner of the client area [14A] as (0, 0) and the upper-right corner as (35, 80). This means that the rescaled co-ordinates of E1 [15A] are (25, 60). The identification processor [46] then creates a sub-report for Laptop 1 [13A] at Step S6a4. This will contain the re-scaled co-ordinates of E1 [15A] together with an ID for E1 [15A] added at Step S6a5. It then sends this report to Laptop 1 [13A] at Step S6a7 and the process moves on to the steps described in Figure 7. The TIM [12] may also send empty reports to Laptop 2 [13B] and Laptop 3 [13C].

At Step S6, Laptop 1 [13A] receives the report. If there were a backlog of touch information - say, earlier reports on the movement of the touch interaction comprising E1 [15A], since it is a drag gesture - it might combine the newly-received report with the reports in this backlog by simply updating the location at Step S7.

At Step 8, Laptop 1 [13A] then injects E1 [15A] into the OS. This means that the OS receives a signal indicating a continuing user interaction with the window that is being dragged, and at Step S10 it therefore updates the location of the window and generates a new display image. At Step S11, this display image is sent to the TIM [12] for display on both display panels [11A, 11B] in the appropriate client areas [14A, 14C].

If empty reports were sent to Laptop 2 [13B] and Laptop 3 [13C], these empty reports might serve as indications to those two computing devices [13B, 13C] that any touch interactions that had previously been ongoing had ended through the branch of the process that incorporates Step S9b. These computing devices [13B, 13C] could therefore also react by ending user interactions (for example, "dropping" an object being dragged).

The process will now be described with reference to E2 [15B] and E3 [15C].

At Step S1, Display Panel 2 [11B] detects a touch interaction. In the case of E2 [15B] this is a circular motion of five points of contact in close proximity. Display Panel 2's controller [16B] therefore determines the location of each point of contact and sends five locations together with five touch IDs to the TIM [12] at Step S2.

At the same time, in a second iteration of Step S1, Display Panel 2 [11B] detects a second touch interaction: the four-finger drag which comprises E3 [15C]. Its controller [16B] therefore also determines the locations of these four points of contact and sends their locations together with four touch IDs to the TIM [12] in a second iteration of Step S2.

At Step S3, Display Panel 2 [11B] also sends its periodic synchronisation signal. This means that two touch interactions have been sent to the TIM [12] prior to the synchronisation signal, and therefore when the TIM [12] generates a synchronisation report at Step S4 in response to the synchronisation signal, this report contains a total of nine location-ID pairs. It may also add a third datum to the touch information indicating location-ID pairs that are sufficiently close to one another or that came in at a sufficiently similar time to be considered single interactions, in order to make it easier to determine which touch information belongs to individual touches such as E1 [15A] and which touch information belongs to multi-touch gestures.

At Step S5, the identification engine [42] takes the first interaction from the synchronisation report generated at Step S4. This comprises the five location-ID pairs comprising E2 [15B]. It then compares this touch information, potentially together with stored touch information from previous synchronisation reports in order to determine a history of movement, to the predetermined known interactions [45] in order to determine whether it is a user-interface gesture or whether it is an interaction with a computing device [13] such as E1 [15A].

In this example, E2 [15B] is a user-interface gesture and the identification engine [46] will therefore find a predetermined known interaction [45] that matches a five-touch rotational movement. It therefore moves on to Step S5a and sends a signal to the UI controller [41] such as an identification of the interaction. The UI controller [41] determines the instructions associated with that interaction and follows them by, in this example, determining the co-ordinates of the interaction from the interaction analyser [42] and comparing them to the locations of the client areas [47], then sending a signal to the computing devices [13B, 13C] associated with the closest client areas [14D, 14E] to the location of E2 [15B] indicating that they should turn off any integral displays and only send display images to the TIM [12] for display on the display panels [11].

The process then returns to Step S5 and the identification engine [46] takes the second interaction from the synchronisation report. This comprises the four location-ID pairs comprising E3 [15C]. It then compares this information and potentially any historical touch information to the predetermined known interactions [45] as previously described.

As in the case of E2 [15B], the touch information matches a predetermined known interaction [45] and the identification engine [46] therefore determines that it is a user-interface gesture. At S5a, it therefore sends a signal to the UI controller [41], potentially comprising an identification of the interaction and the location at which it occurred, the raw reported touch information, or other information that will allow the UI controller [41] to determine the instructions it should follow.

The UI controller [41] receives the interaction information and the controller engine [48] determines that this interaction indicates that the client area [14C] on which it occurred should be resized. It therefore determines the location at which E3 [15C] occurred and compares it to the locations of the client areas [47B] on Display Panel 2 [11B] in order to determine that it occurred within the client area [14C] associated with Laptop 1 [13A]. The controller engine [48] therefore updates the stored client area information [47B] associated with Laptop 1 [13A] on Display Panel 2 [11B], resizing the client area [14C].

The process will now be described with reference to E4 [15D]. For the purposes of this description, E4 [15D] will initially be described as taking place in a system that follows the version of the process described in Figure 6a.

At Step S1, the sensors [21] detect a movement of the user's hand. This may be a movement of the hand alone or may be a movement of a sensor on the hand, for example worn as a glove. In the case of E4 [15D] the movement is a sideways motion of an open hand. The controller [22] therefore determines the pose of the hand and its new location and sends this information to the TIM [12] at Step S2. This may mean transmitting a signal indicating that the hand is open together with a location of the entire hand or may mean transmitting the locations of multiple sensor points or points of interest such as the fingertips and the centre of the palm which will allow the TIM [12] to determine the pose and orientation of the hand. At Step S3, the controller [22] also transmits a synchronisation signal as previously described, prompting the TIM [12] to generate a synchronisation report containing the received interaction information at Step S4.

At Step S5 the identification engine [46] analyses the received interaction information to determine whether the interaction matches the profile of a predetermined known interaction [45]. This may mean first determining the pose of the hand - for example from several locations associated with particular points of interest - and determining whether that particular pose matches the pose of a predetermined known interaction [45] and then analysing a history of received locations for that hand in order to determine its movement over time and then comparing that movement to the candidate user-interface gestures found.

In this case, a sideways movement with an open hand does not match the profile of any of the predetermined known interactions [45] and the process therefore follows the branch to the right of Figure 5, moving on to the process described in Figure 6a.

At Step S6a1, the identification processor [46] identifies the co-ordinates of the location at which E4 [15D] occurred using the interaction information previously received from the sensor controller [22]. For example, using four points of interest on the hand, the interaction may be located at:
- Tip of thumb: (100, 350, 500)
- Tip of middle finger: (95, 357, 500)
- Tip of little finger: (90, 350, 500)
- Base of palm: (95, 345, 500)

Since the interaction occurs in open space, (X,Y,Z) co-ordinates are used rather than the (X,Y) co-ordinates previously mentioned.

At Step S6a2, the identification processor [46] then determines whether the user's hand is located within an area of space associated with a client area [14], and if so, which client area [14]. This area of space may have nothing to do with the client area [14] in which the display image is displayed on a display panel [11].

For the purposes of this description, the area of space associated with the client area [14A] on Display Panel 1 [11A] associated with Laptop 1 [13A] are as follows:
- Top left front corner: (0, 500, 750)
- Top left back corner: (0, 500, 250)
- Top right front corner: (150, 500, 750)
- Top right back corner: (150, 500, 250)
- Bottom left front corner: (0, 100, 750)
- Bottom left back corner: (0, 100, 250)
- Bottom right front corner: (150, 100, 750)
- Bottom right back corner: (150, 100, 250)

E4 [15D] therefore falls within the area of space associated with the client area [14A] on Display Panel 1 [11A] associated with Laptop 1 [13A].

Although in this example the area of space is a cube, this does not need to be the case; the area of space may be any shape and may be predetermined or programmed by a user.

At Step S6a3, the identification processor [46] determines the co-ordinates of the previously-mentioned points of interest on the user's hand relative to the co-ordinates of the area of space in a similar way to that already described in relation to E1 [15A]. In this case, the identification processor [46] might treat the bottom left back corner of the area of space as (0, 0, 0) such that the re-scaled co-ordinates of the points of interest are as follows:
- Tip of thumb: (100, 250, 250)
- Tip of middle finger: (95, 257, 250)
- Tip of little finger: (90, 250, 250)
- Base of palm: (95, 245, 250)

At Step S6a4, the identification processor [46] creates a sub-report for Laptop 1 [13A] containing these co-ordinates, together with an interaction ID for either or both of each point of interest and the whole hand at Step S6a5. It then transmits this sub-report to Laptop 1 [13A] as previously described and the process moves on to Figure 7.

At Step S6, Laptop 1 [13A] receives the sub-report and optionally coalesces it with any backlog of received reports at Step S7. It then injects the received interaction into the OS at Step S8. This means that the OS receives information on the new locations of each point of interest on the user's hand. It is then able to analyse this information and react according to its programming as previously described, in this case by updating the location of the window associated with the location of the interaction at Step S10. This results in an updated display image which is sent to the TIM [12] for display at Step S11.

If E4 [15D] took place in a system that follows the version of the process described in Figure 6b, the parts of the process described in Figures 5 and 7 would operate in the same way, but the part of the process described in Figure 6b might operate as follows:
At Step S6b1, instead of determining the relevant client area [14] by location as described above, the identification processor [46] compares the received interaction information - in this case the locations of the points of interest from which it can determine the pose of the hand - to a second set of pre-determined interactions comprising the client area identifications. For example, all non-user-interface gestures involving an open hand might refer to the client area [14A] on Display Panel 1 [11A] associated with Laptop 1 [13A] while all non-user-interface gestures involving a closed fist refer to the client area [14B] on Display Panel 1 [11A] associated with Laptop 2 [13B], etc. Alternatively, since the specific client area [14] may not be relevant to which computing device [13] should receive the interaction information, gestures involving an open hand may simply refer to Laptop 1 [13A] and gestures involving a closed fist may refer to Laptop 2 [13B], etc. without reference to specific client areas [14].
At Step S6b2, the identification processor [46] optionally discards the information indicating the pose of the hand. For example, it might retain only the information that there was a sideways movement and the speed and direction of that movement, discarding the information that the movement was made with an open hand. This information is placed in a sub-report at Step S6b3 and assigned an interaction ID at Step S6b4. This sub-report is transmitted to Laptop 1 [13A] at Step S6b5 and the process proceeds as previously described with reference to Figure 7.

The process will now be described with respect to E5.

At Step S1 the sensors [21] detect the movement of a hand as previously described. In this case the movement is a clockwise rotation of an open hand. This may be detected as an entire movement or each part of the movement may be detected and transmitted separately as a series of updated co-ordinates of points of interest such as those already mentioned. In either case, the controller [22] transmits this information to the TIM [12] at Step S2 followed by a synchronisation signal at Step S3, which causes the TIM [12] to generate a synchronisation report at Step S4.

At Step S5, the identification engine [46] analyses the interaction information contained in the synchronisation report to determine whether the received interaction is a predetermined known interaction [45]. This may mean collecting several synchronisation reports in order to determine an overall motion or, where a synchronisation report contains more information on the history of the interaction, it may be able to extract the whole movement from a single report. In any case, it compares the received interaction information to the stored predetermined known interactions [45].

In this case a clockwise rotation of an open hand does match a predetermined known interaction [45] and the interaction analyser [42] therefore transmits a signal to the UI controller [41] at Step S5a. As previously mentioned, the signal may comprise the interaction information, an identification of the gesture or command to follow a particular set of instructions, the instructions themselves, or any combination of such information.

The UI controller [41] reacts by following the instructions associated with the gesture. In this case, this might mean determining the display panel [11] associated with a location of the gesture - Display Panel 2 [11B], in this example - and updating the location information [47B] of the client areas [14C, 14D, 14E] such that the client areas associated with Laptop 2 [14D] and Laptop 3 [14E] are resized and moved to the left while the client area associated with Laptop 1 [14C] is resized and moved to the bottom-right corner, meaning that all three client areas [14C, 14D, 14E] form a row along the bottom of the display panel [11B].

The process will now be described with respect to E6 [15F] and E7 [15G].

At Step S1 the microphone [31] detects sound in the conventional way. The controller [32] records the sound detected and transmits it to the TIM [12] at Step S2. It may record all sound between periodic synchronisation signals or it may determine separate sound interactions by, for example, distinguishing between users' voices according to training carried out during configuration, distinguishing between types of sounds such as voices as opposed to claps, or identifying sounds separated by a time interval as separate interactions.

In this example, the microphone [31] detects the sound of both users speaking, giving different instructions: the first user says, "Snap client area two left" and the second user says, "Laptop two, open word processor". The controller [32] identifies their two voices as comprising separate interactions and therefore sends them separately to the TIM [12], followed by a synchronisation signal sent at Step S3.

In some embodiments, the controller [32] may also analyse the recorded voice in order to determine whether the voice belongs to an authorised user according to training carried out during configuration. If it does not recognise the voice, it might simply ignore the interaction and send no information to the TIM [12]. Alternatively, this analysis may be carried out by the TIM [12] prior to proceeding with the process.

At Step S4, the interaction analyser [42] generates a synchronisation report containing the two interactions received before the synchronisation signal. The identification processor [46] then takes the first interaction from the report - E6 [15F] - and determines whether it matches a predetermined known interaction [45] at Step S5. This may mean analysing the interaction information to determine whether only part of the recorded sound matches a predetermined known interaction [45]: in this case, the word "Snap". If only part of the interaction information matches a predetermined known interaction, it may mean that the rest of the interaction should in fact be treated as a separate interaction, for example if the user had given several commands in quick succession, or it may mean that the remainder of the interaction simply comprises parameters for the user-interface command, as in this case. This determination may depend on the user-interface command identified, such that "Snap" expects parameters while "Increase brightness" does not, for example.

In this case, the interaction does match a predetermined known interaction [45] and as such the process follows the branch to the left to Step S5a and the interaction analyser [42] transmits a signal to the UI controller [41]. This may, in this case, comprise a signal indicating that the command "Snap" was used followed by the remainder of the interaction information, or the interaction analyser [42] may further analyse the interaction information and identify the phrases "client area two" and "left" and therefore send more detailed instructions to the UI controller [41] identifying the client area [14] affected and the changes to be made to its stored location information [47].

In either case, the UI controller [41] determines the action it should take according to its pre-programmed instructions and amends the location information of the client area [14B] on Display Panel 1 [11A] associated with Laptop 2 [13B] such that it is moved to the left-hand side of the display panel and the client area [14A] associated with Laptop 1 [13A] is either deleted or moved to the right-hand side of the display panel [11A].

The process then returns to Step S5 and the identification engine [46] analyses the second interaction in the report: E7 [15G].

The identification engine [46] compares the whole interaction and its component parts to the predetermined known interactions [45] as previously described, but in this case the interaction does not match a predetermined known interaction [45] and therefore the process follows the branch to the right to Figure 6b.

At Step S6b1, the identification engine [46] searches the interaction information for a client area identification by comparing the whole and parts of the interaction information to stored client area identifications. In this case, part of the interaction - "Laptop two" - does match a stored client area identification associated with one client area [14B] on Display Panel 1 [11A] and one [14D] on Display Panel 2 [11B]. As this suggests, each client area [14] may have multiple identifications associated with it such that the client area [14B] on Display Panel 1 [11A] associated with Laptop 2 [13B] can be referred to both as "Client area two", as in E6 [15F], and "Laptop two", as in E7 [14G].

At Step S6b2, the identification engine [42] crops the interaction information to only the command. In this case, this would mean discarding the part of the recorded sound identified as "Laptop two" and retaining only the phrase "open word processor". This command is then put into a sub-report addressed to Laptop 2 [13B] at Step S6b3 and assigned an interaction ID at Step S6b4. Multiple commands with different interaction IDs may be stored in the same report, or a lengthy voice interaction - for example, dictating text to be typed into a word processor - may be split into several reports in which each part has the same interaction ID. The sub-report is transmitted to Laptop 2 [13B] at Step S6b5 and the process proceeds to Figure 7.

At Step S6, Laptop 2 [13B] receives the sub-report. It is unlikely to be appropriate to extrapolate a sub-report where one has not been received in this case, and it is also unlikely to be appropriate to coalesce a backlog of reports as at Step S7, though in the case of a lengthy voice interaction different parts of the interaction with the same interaction ID in different reports could be concatenated.

At Step S8 the interaction is injected into the OS as if received directly by the computing device [13B]. The computing device [13B] is therefore able to analyse it and react to it as determined by its programming, as previously described. In this case, it determines that the received interaction is a command to open its default word processing software and does so at Step S10. This is likely to result in a change to the display image and an updated display image is therefore transmitted to the TIM [12] for display at Step S11.

The types of interaction have been described as if any given system will only respond to a particular type of interaction. However, this is only for the sake of simplicity and different types of interaction may be combined. For example, a user may make a sideways gesture with a closed fist while saying "Jane's Laptop" in order to move a window shown in the display image generated by the computing device identified as "Jane's Laptop". In this case, the combined interaction would not be identified as a user-interface interaction and the voice command "Jane's Laptop" would be identified as a client area identification as previously described, causing the closed-fist gesture to be transmitted in a sub-report to the appropriate computing device. Likewise, if the user made a single-finger drag on a touchpad controller while saying "Client Area 1", the TIM might interpret this as a user-interface interaction such as a command to move the client area identified as Client Area 1. Similarly, different users may interact in different ways with the same system simultaneously.

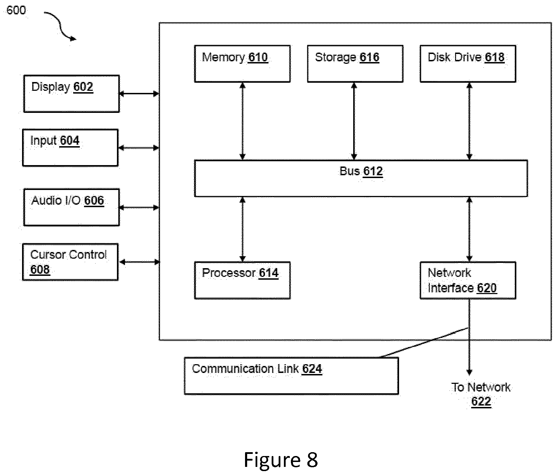

Fig. 8 is a block diagram of a computer system [600] suitable for implementing one or more embodiments of the present disclosure, including the TIM [12] and/or the laptops [13]. The computer system [600] includes a bus [612] or other communication mechanism for communicating information data, signals, and information between various components of the computer system [600]. The components include an input/output (I/O) component [604] that processes a user (i.e., sender, recipient, service provider) action, such as selecting keys from a keypad/keyboard, selecting one or more buttons or links, etc., and sends a corresponding signal to the bus [612]. The I/O component 604 may also include an output component, such as a display 602 and a cursor control [608] (such as a keyboard, keypad, mouse, etc.). The display [602] may be configured to present a login page for logging into a user account or a checkout page for purchasing an item from a merchant. An optional audio input/output component [606] may also be included to allow a user to use voice for inputting information by converting audio signals. The audio I/O component [606] may allow the user to hear audio. A transceiver or network interface [620] transmits and receives signals between the computer system [600] and other devices, for example via network [622]. In one embodiment, the transmission is wireless, although other transmission mediums and methods may also be suitable. A processor [614], which can be a micro-controller, digital signal processor (DSP), or other processing component, processes these various signals, such as for display on the computer system 600 or transmission to other devices via a communication link [624]. The processor [614] may also control transmission of information, such as cookies or IP addresses, to other devices.

The components of the computer system [600] also include a system memory component [610] (e.g., RAM), a static storage component [616] (e.g., ROM), and/or a disk drive [618] (e.g., a solid-state drive, a hard drive). The computer system [600] performs specific operations by the processor [614] and other components by executing one or more sequences of instructions contained in the system memory component [610]. For example, the processor [614] can perform the model generation functionalities described herein according to the processes described above.

Logic may be encoded in a computer readable medium, which may refer to any medium that participates in providing instructions to the processor [614] for execution. Such a medium may take many forms, including but not limited to, non-volatile media, volatile media, and transmission media. In various implementations, non-volatile media includes optical or magnetic disks, volatile media includes dynamic memory, such as the system memory component [610], and transmission media includes coaxial cables, copper wire, and fiber optics, including wires that comprise the bus [612]. In one embodiment, the logic is encoded in non-transitory computer readable medium. In one example, transmission media may take the form of acoustic or light waves, such as those generated during radio wave, optical, and infrared data communications.

Some common forms of computer readable media includes, for example, floppy disk, flexible disk, hard disk, magnetic tape, any other magnetic medium, CD-ROM, any other optical medium, punch cards, paper tape, any other physical medium with patterns of holes, RAM, PROM, EPROM, FLASH-EPROM, any other memory chip or cartridge, or any other medium from which a computer is adapted to read.

In various embodiments of the present disclosure, execution of instruction sequences to practice the present disclosure may be performed by the computer system [600]. In various other embodiments of the present disclosure, a plurality of computer systems [600] coupled by the communication link 624 to the network (e.g., such as a LAN, WLAN, PTSN, and/or various other wired or wireless networks, including telecommunications, mobile, and cellular phone networks) may perform instruction sequences to practice the present disclosure in coordination with one another.

Where applicable, various embodiments provided by the present disclosure may be implemented using hardware, software, or combinations of hardware and software. Also, where applicable, the various hardware components and/or software components set forth herein may be combined into composite components comprising software, hardware, and/or both without departing from the spirit of the present disclosure. Where applicable, the various hardware components and/or software components set forth herein may be separated into sub-components comprising software, hardware, or both without departing from the scope of the present disclosure. In addition, where applicable, it is contemplated that software components may be implemented as hardware components and vice-versa.

Software in accordance with the present disclosure, such as program code and/or data, may be stored on one or more computer readable mediums. It is also contemplated that software identified herein may be implemented using one or more general purpose or specific purpose computers and/or computer systems, networked and/or otherwise. Where applicable, the ordering of various steps described herein may be changed, combined into composite steps, and/or separated into sub-steps to provide features described herein.

The various features and steps described herein may be implemented as systems comprising one or more memories storing various information described herein and one or more processors coupled to the one or more memories and a network, wherein the one or more processors are operable to perform steps as described herein, as non-transitory machine-readable medium comprising a plurality of machine-readable instructions which, when executed by one or more processors, are adapted to cause the one or more processors to perform a method comprising steps described herein, and methods performed by one or more devices, such as a hardware processor, user device, server, and other devices described herein.

It will be appreciated that although several particular embodiments of the invention have been described in detail, various modifications and improvements can be made by a person skilled in the art without departing from the scope of the present invention, as defined by the attached claims.

## Claims

1. A method of controlling display of at least one image from one or more client devices on at least one remote display panel, the method comprising:
receiving information regarding a location at which at least one image from one or more client devices is displayed on at least one remote display panel;
receiving information regarding a human interaction performed by a user;
comparing the information to stored information regarding predetermined known interactions to determine whether the performed human interaction corresponds to one of one or more predetermined known interactions;
if it is determined that the performed human interaction corresponds to one of one or more predetermined known interactions:
controlling the at least one display panel to display the at least one image on the at least one display panel according to predetermined instructions associated with the predetermined known interaction corresponding to the performed human interaction; and
if it is determined that the performed human interaction does not correspond to a predetermined known interaction:
determining one or more images displayed on the at least one display panel associated with the performed human interaction;
determining one or more client devices from which the determined one or more images was received; and
sending the information regarding the performed human interaction to the determined one or more client devices.

2. A method according to claim 1, wherein the least one remote display panel comprises at least one touchscreen display panel and the human interaction comprises a touch gesture performed by the user on the at least one touchscreen display panel, optionally wherein determining one or more images displayed on the at least one display panel associated with the performed human interaction comprises determining a location on the at least one touchscreen display panel at which the touch gesture is performed, and the determined one or more images are displayed at or near the determined location.

3. A method according to claim 2, wherein the information includes at least a number of touches performed simultaneously forming the touch gesture, and a location on the at least one touchscreen display panel of a beginning and end of each touch forming the touch gesture, optionally further comprising determining from the information a type of touch gesture being performed and the comparing compares the determined type of touch gesture to predetermined known touch gesture types.

4. A method according to claim 1, wherein the human interaction comprises a gesture performed by the user in three dimensions, 3D, using one or more Virtual Reality gloves, or a 3D air pointer device.

5. A method according to claim 1, wherein the human interaction comprises a voice statement, which is received by a microphone.

6. A method according to claim 5, further comprising determining whether the voice statement is provided in a voice corresponding to the voice of an authorised user and, if so, determining whether the voice command corresponds to one of one or more predetermined voice commands.

7. A method according to any preceding claim, wherein the steps are performed by an interaction analyser, wherein if it is determined that the performed human interaction corresponds to a predetermined known interaction, the interaction analyser informs a user interface, UI, controller to control the at least one display panel according to the predetermined instructions associated with the predetermined known interaction and if it is determined that the performed human interaction does not correspond to a predetermined known interaction the interaction analyser sends the information to the determined one or more client devices.

8. A method according to any preceding claim, further comprising:
receiving the at least one image from one or more client devices; and
displaying the image initially on a predetermined area of the at least one display panel.

9. A method according to claim 8, wherein at least one image is received from a plurality of client devices, the images from each of the plurality of client devices being displayed initially on predetermined areas of the at least one display panel, optionally wherein the predetermined areas of the at least one display panel are predetermined according to the client device from which the image is received, or according to an order in which the images are received, or according to content type in the images that are received.

10. A method according to either claim 8 or claim 9, wherein the steps of receiving the at least one image and displaying the image are performed by a user interface, UI, controller.

11. An apparatus for controlling display of at least one image from one or more client devices on at least one remote display panel, the apparatus configured to perform all steps of a method according to any one of claims 1 to 7.

12. The apparatus of claim 11, further configured to perform all steps of a method according to any one of claims 8 to 10.

13. A system comprising:
an interaction analyser comprising the apparatus of claim 11;
a user interface, UI, controller coupled to the apparatus;
at least one display panel coupled to the UI controller;
and one or more client devices coupled to the UI controller.

14. The system of claim 13, wherein the UI controller is incorporated into the interaction analyser.

15. A computer readable medium including executable instructions which, when executed in a processing system, cause the processing system to perform all the steps of a method according to any one of claims 1 to 10.
